# EUROPÄISCHE PATENTSCHRIFT

(11) **EP 1 034 346 B1**
(45) Veröffentlichungstag und Bekanntmachung des Hinweises auf die Patenterteilung: **28.08.2002**
(21) Anmeldenummer: 98965673.1
(22) Anmeldetag: 16.11.1998
(51) Int. Cl.: E04G 7/30

(54) **VERBINDUNGSVORRICHTUNG FÜR EINEN AUFLAGERIEGEL**
CONNECTING DEVICE FOR A BEARER
DISPOSITIF D'ACCOUPLEMENT POUR TRAVERSE D'APPUI

(30) Priorität: 01.12.1997 DE 19753295
(43) Veröffentlichungstag der Anmeldung: 13.09.2000
(73) Patentinhaber: Plettac AG, 58840 Plettenberg (DE)
(72) Erfinder: HENGSTENBERG, Rolf, D-57439 Attendorn (DE); TILSCH, Ute, D-58840 Plettenberg (DE); SCHADWINKEL, Holger, D-88471 Laupheim (DE)
(74) Vertreter: Wolff, Felix, Dr.
(86) Internationale Anmeldenummer: EP9807301
(87) Internationale Veröffentlichungsnummer: WO99028573

(56) Entgegenhaltungen:
- EP-A- 0 276 487
- EP-A- 0 351 703
- EP-A- 0 423 516
- EP-A- 0 451 068
- DE-A- 19 625 545
- FR-A- 2 723 153

## Beschreibung

Die vorliegende Erfindung betrifft eine Verbindungsvorrichtung gemäß dem oberbegriffs des Patentanspruch 1.

Verbindungsvorrichtungen dieser Art sind z.B. aus der DE-PS-24 49 124 oder der EP-A-0351703 bekannt. Dort ist eine Verbindung für horizontale und/oder diagonal verlaufende Gerüstelemente mit vertikalen Ständerelementen beschrieben. Die vertikalen Ständerelemente sind in regelmäßigen Abständen Haltevorrichtungen zum Einhängen der horizontalen und/oder diagonal verlaufenden Gerüstelemente versehen, wobei diese Haltevorrichtungen in zwei zueinander senkrechten Richtungen angeordnet längliche Durchbrüche aufweisen. Die horizontal und/oder diagonal verlaufenden Gerüstelemente haben an ihren Enden Verbindungsvorrichtungen, jeweils bestehend aus einem Anschlußkopf und einem Keil. Der Anschlußkopf weist einen sich im Einbauzustand senkrecht zur Mittelachse des vertikalen Ständerelementes erstreckenden, mindestens die Dicke der Haltevorrichtung entsprechenden Schlitz auf, der im zusammengebauten Zustand die Haltevorrichtung umgreift. Die Anschlußköpfe der horizontalen und/oder vertikalen Gerüstelemente sind in den Haltevorrichtungen mit einem Keil festklemmbar. Durch die Gestaltung der Durchbrüche gelingt eine genaue Ausrichtung der horizontalen bzw. diagonalen Gerüstelement sowohl in gradliniger als auch in rechtwinkliger Richtung ohne Zuhilfenahme besonderer Meßverfahren.

Diese Verbindungsvorrichtung hat sich in langjährigem Einsatz bewährt. Sie hat jedoch den Nachteil, daß das Biegemoment, das die Verbindungsvorrichtung aufnehmen kann, begrenzt ist, so daß sich das Gerüst bei hohen Belastungen verwinden kann. Diesen Nachteil könnte man beheben, indem der Anschlußkopf, der sich an den beiden Enden der horizontalen bzw. diagonalen Gerüstelementen befindet vergrößert wird, was aber das Gewicht des Auflageriegels erhöhen und damit dessen Handhabbarkeit erschweren würde.

Der vorliegenden Erfindung liegt deshalb die Aufgabe zugrunde, eine Verbindungsvorrichtung zur Verfügung zu stellen, die ein höheres Biegemoment aufnehmen kann als Verbindungsvorrichtungen gemäß des Standes der Technik, ohne daß deren Gewicht merklich erhöht wird.

Die Aufgabe wird erfindungsgemäß durch eine Verbindungsvorrichtung mit den Merkmalen des Patentanspruchs 1 gelöst.

Vorzugsweise verjüngen sich die Oberseite des Auflagekopfes entlang einer aus mehreren konvexen und/oder konkaven Teilkreisbögen mit unterschiedlichen Radien zusammengesetzten Kurve, während sich die Unterseite des Auflagekopfes entlang eines konvexen Teilkreisbogens mit einem konstanten Radius verjüngt.

Vorzugsweise beträgt die Gesamthöhe des Anschlußkopfes auf der Seite, mit der der Anschlußkopf an dem Gerüstrohr des Ständerelementes anliegt 70 bis 80 mm.

Die Seitenbegrenzungsflächen des erfindungsgemäßen Auflagekopfs sind vorzugsweise keilartig auf ein Zentrum zulaufend gestaltet. Besonders bevorzugt bilden die Seitenbegrenzungsflächen bezogen auf die Mittelachse jeweils maximal einen Winkel von 22,5°, vorzugsweise 22° oder weniger.

Auf der der Anlagefläche gegenüberliegenden Seite befindet sich das Mittel zum Anschweißen der Gerüstrohre, das vorzugsweise einen für die Anschweißung geeigneten Verschweißbereich und Zentrierhilfen für die Gerüstrohre aufweist Der Verschweißbereich kann entweder für runde, rechteckige oder quadratische Gerüstrohr ausgebildet sein. Mit den Zentrierhilfen werden das Gerüstrohr und der Auflagekopf zueinander zentriert. Besonders bevorzugt sind für das Anschweißen von runden Rohren 4 Zentrierhilfen jeweils um 90° zueinander versetzt an dem Auflagekopf so angebracht, daß der Abstand der Außenfläche von zwei jeweils gegenüberliegenden Zentrierhilfen gleich oder etwas kleiner ist als der Innendurchmesser des Gerüstrohres, das vor dem Verschweißen über die Zentrierhilfe geführt wird. Bei rechteckigen Rohren wird die Zentrierhilfe U-förmig ausgebildet.

Wird der Auflagekopf mit einem runden Gerüstrohr verschweißt, so weist der Verschweißbereich vorzugsweise eine Anstoßringfläche auf, an der das runde Gerüstrohr anliegt. Der Außendurchmesser der Anstoßringfläche ist kleiner als der Außendurchmesser des Gerüstrohres. An die Anstoßringfläche schließt sich eine Konusfläche an, deren äußerer Durchmesser gleich oder geringfügig größer ist als der Außendurchmesser des Gerüstrohrs. An die Konusfläche wiederum schließt sich eine Zylinderfläche an, deren Durchmesser gleich oder geringfügig großer ist, als der Außendurchmesser des Gerüstrohres. Durch diese Gestaltung des Verschweißbereiches wird erreicht, daß eindeutig definierte Schweißbedingungen in Form einer halben Y-Naht vorliegen, so daß die Schweißverbindung mit einem Schweißautomaten hergestellt werden kann.

In einer weiteren bevorzugten Ausführungsform ist das Klemmittel der Verbindungsvorrichtung ein Keil. Dieser Keil wird durch einen der Durchbrüche der Haltevorrichtungen der vertikalen Ständerelemente gesteckt und dann z.B. mit einem Hammer festgeschlagen, so daß eine form- und kraftschlüssige Verbindung zwischen den horizontalen bzw. diagonalen Gerüstelementen und den vertikalen Ständerelementen entsteht.

In einer ebenfalls bevorzugten Ausführungsform weist der Auflagekopf auch noch vorzugsweise runde oder sternförmige Bolzen zur kraftschlüssigen Verbindung mit den Belägen auf, die auf dem Auflageriegel liegen. Vorzugsweise befinden sich die Bolzen jeweils links und rechts an der Außenseite des Auflagekopfs. Die Bolzen sind vorzugsweise jeweils so abgeflacht und in dem Auflagekopf integriert, daß die jeweilige Außenseite der Bolzen die jeweilige Außenseite des Auflagekopfs nicht überragt. Die Bolzen werden vorzugsweise in die Gußform zur Herstellung der Verbindungsvorrichtung integriert.

Ein weiterer Gegenstand der Erfindung ist ein Auflageriegel, der aus einem Rohr und jeweils einer erfindungsgemäßen Verbindungsvorrichtung an jedem seiner Enden besteht.

Ebenfalls Gegenstand der Erfindung ist die Verwendung der erfindungsgemäßen Verbindungsvorrichtung und des erfindungsgemäßen Auflageriegels als Teil eines Gerüstsystems.

Die Vorteile der Erfindung sollen im folgenden anhand der Figuren **1-4** erläutert werden. Die Erläuterungen sind lediglich beispielhaft und schränken somit die Erfindung nicht ein.

In den Figuren zeigen:
- **Fig. 1**: eine erfindungsgemäße Verbindungsvorrichtung in drei Ansichten, wobei der Verschweißbereich für runde Gerüstrohre ausgebildet ist.
- **Fig. 2**: eine erfindungsgemäße Verbindungsvorrichtung in zwei Ansichten, wobei der Verschweißbereich für U-förmige Gerüstrohre ausgebildet ist.
- **Fig. 3**: die erfindungsgemäße Verbindungsvorrichtung mit integrierten Bolzen in zwei Ansichten.
- **Fig. 4**: eine erfindungsgemäßer Auflageriegel verbunden mit der Lochscheibe der vertikalen Ständerelemente.

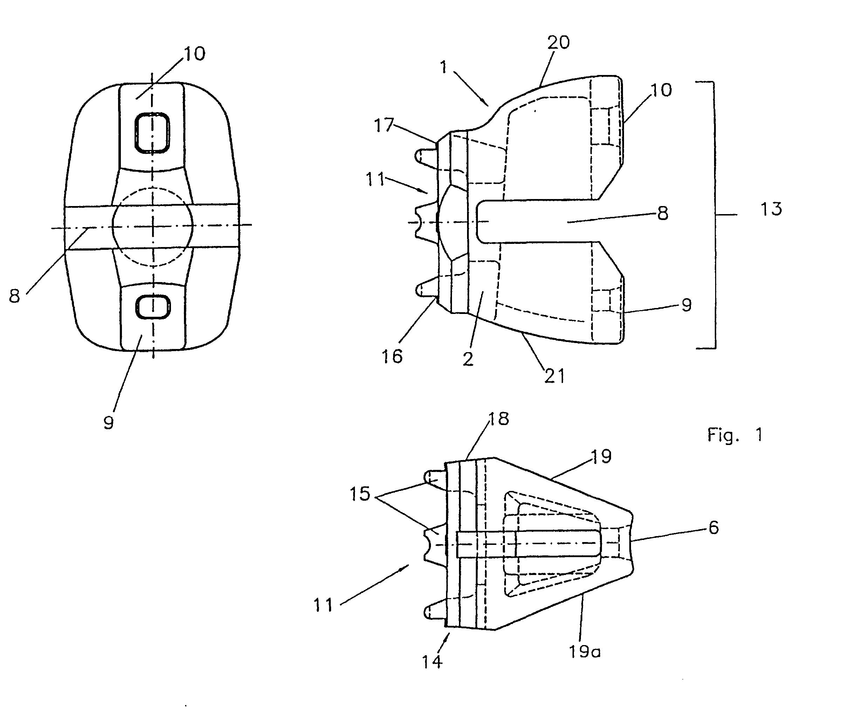

In **Figur 1** ist eine erfindungsgemäße Verbindungsvorrichtung 1 dargestellt. Die Verbindungsvorrichtung besteht aus einem Auflagekopf 2 und einem Keil (nicht dargestellt). Der Auflagekopf hat an einer Seite die Anlagefläche 6, mit der der Auflagekopf an dem Gerüstrohr des vertikalen Ständerelements (nicht dargestellt) anliegt. Dementsprechend entspricht der Radius, mit dem die Anlagefläche 6 gewölbt ist, dem halben Durchmesser der Gerüstrohre; d.h. 24,15 mm. Die Gesamthöhe 13 des Anlagekopfes auf dieser Seite beträgt 76 ±1,3 mm.
Die Anlagefläche 6 wird durch den Schlitz 8 in zwei Teilflächen 9 und 10 geteilt. Das Verhältnis der Höhe der Teilfläche 9 zu der Höhe der Teilfläche 10 ist 1:1,38.

Die Oberseite 20 und die Unterseite 21 des Auflagekopf verjüngen sich von der Anlagefläche 6 zu dem Mittel zum Anschweißen des Gerüstrohres 11 kontinuierlich. Die Oberseite 20 des Auflagekopfes verjüngt sich entlang einer aus mehreren kovexen und konkaven Teilkreisbögen, die unterschiedliche Radien aufweisen, zusammengesetzten Kurve, wobei in der Nähe der Auflagefläche 6 der Radius des Teilkreisbogens so groß ist, daß die Oberseite in diesem Bereich fast eben ist. Die Unterseite 21 des Auflagekopfes hingegen verjüngt sich entlang eines konvexen Teilkreisbogens mit einem konstanten Radius.

Die Seitenbegrenzungsflächen 19 und 19a des Auflagekopfs sind keilartig auf ein Zentrum zulaufend gestaltet. Die Seitenbegrenzungsflächen bilden bezogen auf die Mittelachse jeweils einen Winkel von 22°.

Auf der der Anlagefläche 6 gegenüberliegenden Seite weist der Auflagekopf ein Mittel 11 zum Anschweißen eines runden Gerüstrohres auf. Dieses Mittel 11 setzt sich u.a. aus 4 Zentrierhilfen 15 zusammen, die jeweils um 90° versetzt auf einem Kreisbogen angeordnet sind. Der Abstand der Außenfläche von zwei jeweils gegenüberliegenden Zentrierhilfen beträgt 41,2 mm; d.h. er ist etwas kleiner als Innendurchmesser des Gerüstrohres, das über die Zentrierhilfen vor dem Verschweißen geführt wird.

Ferner weist das Mittel zum Anschweißen des Gerüstrohres 11 noch einen Verschweißbereich 14 mit einer Anstoßringfläche 16 auf, an der das Gerüstrohr 12, nachdem es über die Zentrierhilfe 15 geführt worden ist, anliegt. Der Außendurchmesser der Anstoßringfläche 16 beträgt 45,5 mm und ist damit geringfügig kleiner als der Außendurchmesser des anzuschweißenden Gerüstrohres. An die Anstoßringfläche 16 schließt sich eine 4,1 mm breite Konusringfläche 17 an und daran wiederum eine 4,8 mm breite Zylinderfläche 18 mit einem Durchmesser von 51,5 mm an. Durch die Anordnung der einzelnen Flächen und die Wahl der einzelnen Durchmesser werden auf der gesamten Länge der Schweißnaht eindeutig definierte Schweißbedingungen in Form einer halben Y-Naht erzielt. Eindeutig definierte Schweißbedingungen sind eine wichtige Voraussetzung dafür, daß die Schweißnaht mit einem Schweißautomaten angefertigt werden kann.

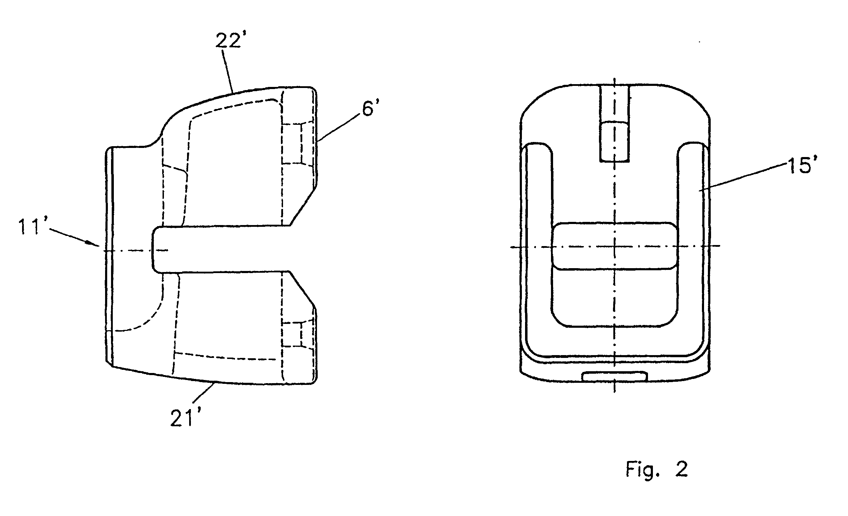

In **Figur 2** ist ebenfalls die erfindungsgemäße Verbindungsvorrichtung dargestellt, wobei der Verschweißbereich für U-förmige Gerüstrohre ausgebildet ist. In diesem Fall ist die Zentrierhilfe 15' U-förmig gestaltet, so daß ein U-förmiges Gerüstrohr darüber geführt werden kann, bevor es mit dem Auflagekopf verschweißt wird. Auch bei diesem Gerüstkopf ist deutlich zu erkennen daß sich sowohl die Oberseite 20' als auch die Unterseite 21' des Gerüstkopfes von der Anlagefläche 6' zu dem Mittel zum Anschweißen des rechteckigen Gerüstrohres 11' kontinuierlich und entlang einer ähnlichen Kurve wie der Auflagekopf gemäß Fig. 1 verjüngen.

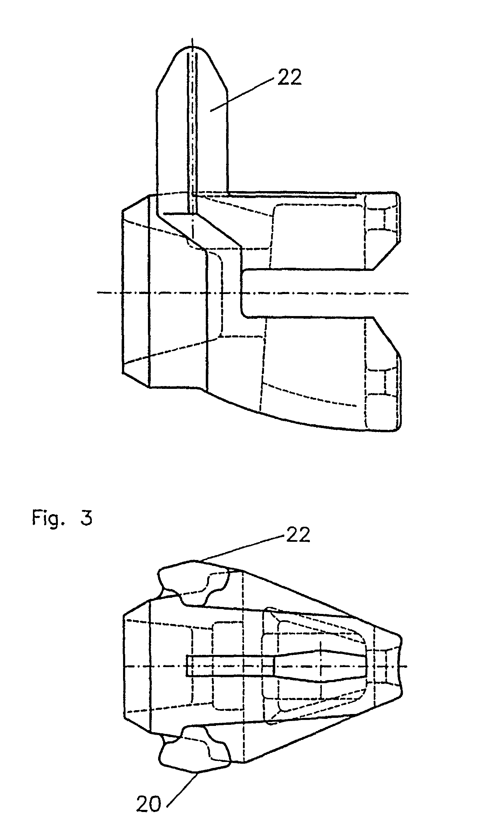

In **Figur 3** ist ein Auflagekopf mit integrierten Bolzen 22 dargestellt. Die Bolzen zur kraftschlüssigen Verbindung mit Belägen, die auf den Auflageriegeln, mit den erfindungsgemäßen Verbindungsvorrichtungen liegen, befinden sich jeweils links und rechts an der Außenseite des Auflagekopfs. Die Bolzen sind dreieckförmig ausgebildet.

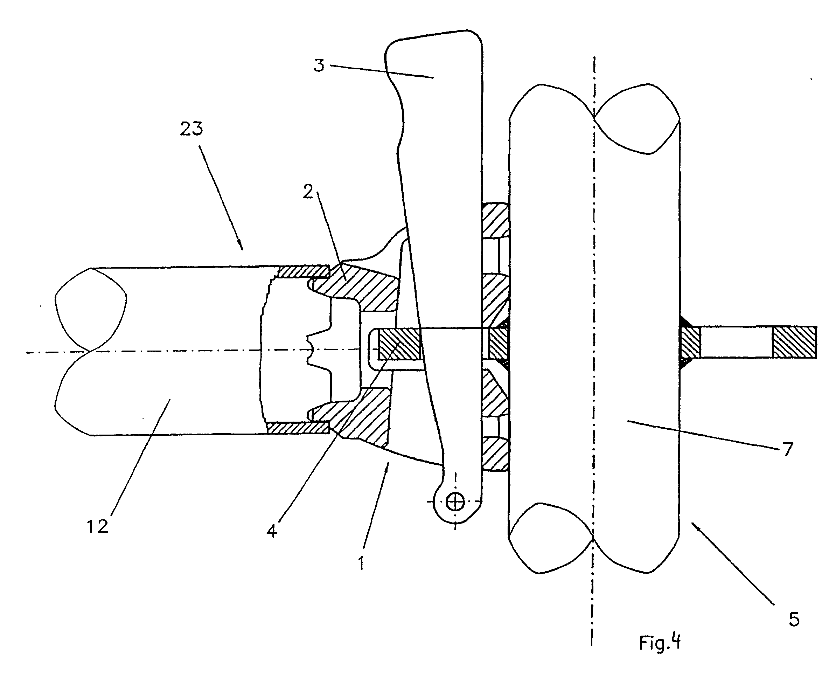

In **Figur 4** ist ein horizontales Gerüstelement 23 mit einem Gerüstrohr 12 dargestellt, das an seinen Enden die erfindungsgemäße Verbindungsvorrichtung 1 aufweist, die mit der Lochscheibe 4 eines vertikalen Ständerelementes 5 verbunden ist.
Der Zusammenbau des Gerüstes erfolgt in der Weise, daß die horizontal verlaufenden Gerüstelemente 23, die an ihren Enden die erfindungsgemäßen Verbindungsvorrichtungen aufweisen, mit den in dem Auflagekopf vorgesehenen, horizontalen Schlitz jeweils so über die der Lochscheiben 4 des Gerüstelements geschoben werden und zwar derart, daß der Keil 3 mit einem der Durchbrüche in der Lochscheibe fluchtet. Der Keil wird dann durch den Durchbruch hindurchgesteckt und mit einem Hammer festgeschlagen, so daß die Anlagefläche 6 gegen das Gerüstrohr 7 gedrückt und so eine Form und kraftschlüssige Verbindung zwischen dem horizontalen und dem vertikalen Gerüstelement hergestellt wird.

Die vorliegende Erfindung hat den Vorteil, daß die erfindungsgemäße Verbindungsvorrichtung ein um mindestens 15% höheres Biegemoment aufnehmen kann, ohne daß das Gewicht des Auflagekopfs merklich erhöht wurde. Durch die abgerundete Form der Ober- und Unterseite des Auflagekopfes wird außerdem die Verletzungsgefahr des Personals, das die Gerüste auf- und abbaut, vermindert.

## Patentansprüche

1. Verbindungsvorrichtung (1) bestehend aus einem Anschlußkopf (2) und einem Klemmittel (3), zur Verbindung von horizontal oder diagonal verlaufenden Gerüstelementen mit den Lochscheiben (4) der vertikalen Ständerelemente (5),
wobei der Anschlußkopf (2) an einer Seite die Anlagefläche (6) aufweist, die aus der oberen Teilfläche (10) und aus der unteren Teilfläche (9) besteht, mit denen der Anschlußkopf (2) an dem Rohr (7) des Ständerelements (5) anliegt, und auf derselben Seite einen mindestens der Dicke der Lochscheibe entsprechender horizontaler Schlitz (8) vorhanden ist, der die Anlägefläche in zwei Teilflächen (9, 10) teilt, und
auf der der Anlagefläche (6) gegenüberliegenden Seite Mittel (11) zum Anschweißen eines Gerüstrohres (12) vorgesehen sind,
wobei
die Gesamthöhe (13) des Anschlußkopfes (2) auf der Seite, mit der der Anschlußkopf an dem Rohr (7) anliegt mindestens 68 mm beträgt und sich die Oberseite (20) und die Unterseite (21) des Auflagekopfes von der Anlagefläche (6) zu dem Mittel (11) zum Anschweißen des Gerüstrohres kontinuierlich verjüngen, **dadurch gekennzeichnet, daß** das Verhältnis der Höhe der unteren Teilfläche (9) zu der Höhe der oberen Teilfläche (10) 1:1,3- 1:1,6 beträgt.

2. Verbindungsvorrichtung nach Anspruch 1, **dadurch gekennzeichnet, daß** die Gesamthöhe (13) 70 bis 80 mm beträgt.

3. Verbindungsvorrichtung nach einem der Ansprüche 1 bis 2, **dadurch gekennzeichnet, daß** der Anschlußkopf (2) Seitenbegrenzungsflächen (19, 19a) aufweist, die keilartig auf ein Zentrum zulaufend gestaltet sind.

4. Verbindungsvorrichtung nach einem der Ansprüche 1-3, **dadurch gekennzeichnet, daß** das Mittel zum Anschweißen des Gerüstrohres (12) eine für das Anschweißen von runden, quadratischen oder rechteckigen Gerüstrohren geeignete Ausbildung des Verschweißbereiches (14) und dafür passende Zentrierhilfen (15) aufweist.

5. Verbindungsvorrichtung gemäß Anspruch 4, **dadurch gekennzeichnet, daß** der Verschweißbereich (14) eine Anstoßringfläche (16) für das runde Gerüstrohr (12) aufweist, deren Außendurchmesser kleiner ist als der Außendurchmesser des Gerüstrohrs, daß sich an die Anstoßringfläche (16) eine sich nach vorne erweiternde Konusfläche (17) anschließt und daß sich an die Konusfläche eine Zylinderfläche (19) anschließt, deren Durchmesser gleich oder geringfügig größer ist als der Außendurchmesser des Gerüstrohres (12).

6. Verbindungsvorrichtung nach Ansprüchen 1-5, **dadurch gekennzeichnet, daß** die Klemmvorrichtung (3) ein Keil ist.

7. Verbindungsvorrichtung nach einem der Ansprüche 1-6, **dadurch gekennzeichnet, daß** der Auflagekopf (2) Bolzen (22) zur kraftschlüssigen Verbindung mit darüber einhängbaren Belägen aufweist.

8. Verbindungsvorrichtung nach Anspruch 7, **dadurch gekennzeichnet, daß** sich die Bolzen (22) rechts und links der Außenseite des Auflagekopfs (2) befinden und vorzugsweise einen dreieckigen oder sternförmigen Querschnitt haben.

9. Auflageriegel, bestehend aus einem Gerüstrohr (12) mit jeweils einer Verbindungsvorrichtung (1) gemäß einem der Ansprüchen 1-8 an jedem seiner beiden Enden.

10. Verwendung des Auflageriegels gemäß Anspruch 9 als Teil eines Gerüstsystems.

11. Verwendung der Verbindungsvorrichtung nach einem der Ansprüchen 1-8 als Teil eines Gerüstsystems.

## Claims

1. A connecting device (1) consisting of a coupling head (2) and a clamping means (3) and serving to connect horizontally or diagonally extending scaffolding elements to the pierced discs (4) of vertical post elements (5), the coupling head (2) on one side having a contact surface (6) consisting of an upper partial surface (10) and a lower partial surface (9), by means of which the coupling head (2) makes contact with the tube (7) of post element (5), and one horizontal slot (8) being present on the same side thereof, which corresponds to at least the thickness of the pierced disc and divides the contact surface in two partial surfaces (9, 10), and
means (11) for welding on a scaffold tube (12) being provided on the side opposite the contact surface (6),
whereby
the overall height (13) of the coupling head (2) on that side where the coupling head makes contact with tube (7) is at least 68 mm, and the top side (20) and the bottom side (21) of the bearing head continuously taper from the contact surface (6) to the means (11) for welding on the scaffold tube, **characterized in that** the ratio of the height of the lower partial surface (9) to the height of the upper partial surface (10) is from 1:1.3 to 1:1.6.

2. The connecting device according to claim 1, **characterized in that** the overall height (13) is from 70 to 80 mm.

3. The connecting device according to any of claims 1 to 2, **characterized in that** the coupling head (2) has lateral boundary surfaces (19, 19a) designed so as to taper towards a center in a wedge-like fashion.

4. The connecting device according to any of claims 1 to 3, **characterized in that** the means for welding on the scaffold tube (12) has a design of the welding area (14) suitable for welding on round, square or rectangular scaffold tubes, as well as centering means (15) appropriate for this purpose.

5. The connecting device according to claim 4, **characterized in that** the welding area (14) has an annular contact surface (16) for a round scaffold tube (12), the outer diameter of which is smaller than the outer diameter of the scaffold tube, that the annular contact surface (16) is followed by a conical surface (17) widening towards the front, and that the conical surface is followed by a cylindrical surface (19), the diameter of which is equal to or slightly greater than the outer diameter of the scaffold tube (12).

6. The connecting device according to claims 1 to 5, **characterized in that** the clamping means (3) is a wedge.

7. The connecting device according to any of claims 1 to 6, **characterized in that** the bearing head (2) has bolts (22) for non-positive connection with overlying elements suspendable thereover.

8. The connecting device according to claim 7, **characterized in that** the bolts (22) are situated on the right and left of the exterior surface of bearing head (2) and preferably have a triangular or star-shaped cross-section.

9. A bearing bar, consisting of a scaffold tube (12) having one connecting device (1) according to any of claims 1 to 8 at each of its two ends.

10. Use of the bearing bar according to claim 9 as part of a scaffolding system.

11. Use of the connecting device according to any of claims 1 to 8 as part of a scaffolding system.

## Revendications

1. Dispositif d'accouplement (1) constitué d'une tête d'assemblage (2) et d'un moyen de serrage (3), destiné à assembler des éléments d'échafaudage disposés en diagonale ou horizontalement avec les disques perforés (4) des éléments de montants verticaux (5), dans lequel la tête d'assemblage (2) comporte sur un côté la surface du contact (6) composée d'une partie supérieure (10) et d'une partie inférieure (9), avec lesquelles la tête d'assemblage (2) est ajustée sur le tube (7) de l'élément de montant (5), et qu'il y a sur ce même côté une rainure (8) horizontale correspondant au moins à l'épaisseur du disque perforé, qui divise la surface du contact en deux parties (9,10) et
qu'il est prévu un moyen pour souder un tube d'échafaudage (12) sur le côté opposé de la surface du contact (6),
dans lequel
la hauteur totale (13) de la tête d'assemblage (2) sur le côté avec lequel la tête d'assemblage est ajustée sur le tube (7) est égale à au moins 68 mm, et la face supérieure (20) et la face inférieure (21) de la tête d'appui s'effilent régulièrement de la surface du contact (6) jusqu'à le moyen (11) de soudage du tube d'échafaudage, **caractérisé en ce que** le rapport de la hauteur de la partie inférieure (9) à la hauteur de la partie supérieure (10) est de 1 : 1,3 à 1 : 1,6.

2. Dispositif d'accouplement selon la revendication 1, **caractérisé en ce que** la hauteur totale (13) est de 70 à 80 mm.

3. Dispositif d'accouplement selon une des revendications de 1 à 2, **caractérisé en ce que** la tête d'assemblage (2) comporte des surfaces de délimitation latérales (19,19a), qui sont réalisées en forme de clavette effilée vers le centre.

4. Dispositif d'accouplement selon une des revendications de 1 à 3, **caractérisé en ce que** le moyen de soudage du tube d'échafaudage (12) présente une configuration de la zone de soudage (14) appropriée pour souder des tubes d'échafaudage de section ronde, carrée ou rectangulaire et comporte des moyens de centrage (15) adéquats.

5. Dispositif d'accouplement selon la revendication 4, **caractérisé en ce que** la zone de soudage (14) comporte une surface annulaire de contact (16) pour le tube d'échafaudage rond, dont le diamètre extérieur est inférieur au diamètre extérieur du tube d'échafaudage, qu'une surface conique (17) élargie vers le devant vient se raccorder à la surface annulaire de contact (16), et qu'une surface cylindrique (19) se raccorde à la surface conique, dont le diamètre est égal ou légèrement supérieur au diamètre extérieur du tube d'échafaudage (12).

6. Dispositif d'accouplement selon les revendications de 1 à 5, **caractérisé en ce que** le dispositif de serrage (3) est une clavette.

7. Dispositif d'accouplement selon une des revendications de 1 à 6 , **caractérisé en ce que** la tête d'appui (2) comporte des boulons (22) pour obtenir un assemblage à force avec les garnissages à accrocher sur le dessus.

8. Dispositif d'accouplement selon la revendication 7, **caractérisé en ce que** les boulons (22) se trouvent à gauche et à droite du côté extérieur de la tête d'appui (2) et ont de préférence un section triangulaire ou en étoile.

9. Barre d'appui constituée d'un tube d'échafaudage (12) comportant respectivement un dispositif d'accouplement (1) selon une des revendications de 1 à 8 à chacune de ses deux extrémités.

10. Utilisation d'une barre d'appui selon la revendication 9 en tant que partie d'un système d'échafaudage.

11. Utilisation du dispositif d'accouplement selon une des revendications de 1 à 8 en tant que partie d'un système d'échafaudage.
